# EUROPÄISCHE PATENTSCHRIFT

(11) **EP 3 149 370 B1**
(45) Veröffentlichungstag und Bekanntmachung des Hinweises auf die Patenterteilung: **21.03.2018**
(21) Anmeldenummer: 15722071.6
(22) Anmeldetag: 09.05.2015
(51) Int. Cl.: F16K 15/06, F15B 13/02

(54) **VENTILVORRICHTUNG, INSBESONDERE IN DER ART EINES RÜCKSCHLAGVENTILS AUSGEBILDET UND VERFAHREN ZUM BETRIEB EINER SOLCHEN VENTILVORRICHTUNG**
VALVE DEVICE, IN PARTICULAR A NON-RETURN-TYPE VALVE DEVICE, AND METHOD FOR OPERATING SUCH A VALVE DEVICE
DISPOSITIF FORMANT SOUPAPE, EN PARTICULIER DU TYPE SOUPAPE ANTI-RETOUR ET PROCÉDÉ DE FONCTIONNEMENT D'UN TEL DISPOSITIF FORMANT SOUPAPE

(30) Priorität: 30.05.2014 DE 102014008069
(43) Veröffentlichungstag der Anmeldung: 05.04.2017
(73) Patentinhaber: Hydac Technology GmbH, 66280 Sulzbach/Saar (DE)
(72) Erfinder: BIWERSI, Sascha Alexander, 66693 Mettlach (DE)
(74) Vertreter: Bartels und Partner, Patentanwälte
(86) Internationale Anmeldenummer: PCT/EP2015/000961
(87) Internationale Veröffentlichungsnummer: WO 2015/180824

(56) Entgegenhaltungen:
- US-A- 3 840 049
- US-A- 4 603 710
- US-A1- 2002 092 417

## Beschreibung

Die Erfindung betrifft eine Ventilvorrichtung, insbesondere in der Art eines Rückschlagventils ausgebildet, mit den Merkmalen im Oberbegriff von Anspruch 1. Die Erfindung betrifft ferner ein Verfahren zum Betrieb einer solchen Ventilvorrichtung.

Derartige Ventilvorrichtungen sind im Stand der Technik bekannt. Sie werden eingesetzt, um, insbesondere bei mobilen Arbeitsmaschinen, Steuerungsaufgaben wahrzunehmen, wobei Kavitation in einem Hydraulikkreislauf vermieden werden soll. Häufig ist hierfür ein Vorratstank des Hydraulikkreislaufs auf ein Druckniveau von beispielsweise 10 bar vorgespannt und ein Arbeitsanschluss gegenüber diesem Tank durch die Ventilvorrichtung abgesichert. Wenn der Druck am Arbeitsanschluss aufgrund einer ziehenden Last eines an diesen Anschluss angeschlossenen hydraulischen Verbrauchers absinkt, wird die Ventilvorrichtung geöffnet, um Fluid aus dem Tank in den Verbraucher einzuspeisen, was grundsätzlich mit der Bauteile schädigenden Kavitation einhergeht.

Um die genannte Einspeisefunktion oder Nachsaugfunktion zu gewährleisten, sind verschiedene Bauformen der Ventilvorrichtung üblich. So kann eine Kugel eines üblichen federbelasteten Rückschlagventils als Ventilkörper durch eine Feder vorgespannt sein. Es ist darüber hinaus bekannt, den dahingehenden Ventilkörper dann strömungsoptimiert auszubilden.

Als nachteilig wird bei derartigen Ventilvorrichtungen angesehen, dass besonders hohe Druckdifferenzen (Δp) in Abhängigkeit von dem durch die Ventilvorrichtung strömenden Volumenstrom auftreten können. Weiterhin wirken die auftretenden Strömungskräfte grundsätzlich in schließender Richtung auf den Ventilkörper ein und könnten dadurch den wirksamen Strömungsquerschnitt verringern, was den einzuspeisenden Volumenstrom für den an die Ventilvorrichtung angeschlossenen hydraulischen Verbraucher in ungewollter Weise stark reduzieren kann.

Die US 2002/0092417 A1 beschreibt eine Ventilvorrichtung, insbesondere in der Art eines Rückschlagventils ausgebildet, mit einem in einem Ventilgehäuse längsverfahrbar geführten Ventilkolben, der ausgehend von einer Schließstellung in mindestens einer seiner Öffnungsstellungen einen ersten Fluidraum mit einem zweiten Fluidraum fluidführend verbindet, wobei ein dritter Fluidraum vorhanden ist, der teilweise von einer ersten Steuerfläche des Ventilkolbens begrenzt ist und der über einen Fluidkanal permanent fluidführend mit dem zweiten Fluidraum verbunden und in der Schließstellung des Ventilkolbens von dem ersten Fluidraum getrennt ist, wobei an einer zweiten, der ersten Steuerfläche bei Druckbeaufschlagung entgegengesetzt wirkenden Steuerfläche des Ventilkolbens der Fluiddruck im zweiten Fluidraum ansteht, wobei der Ventilkolben in ein Betätigungsteil und in ein die Fluidführung zwischen dem ersten Fluidraum und dem zweiten Fluidraum ansteuerndes Steuerteil unterteilt ist, und wobei das Steuerteil des Ventilkolbens auf seiner geschlossen ausgebildeten freien Stirnseite in Richtung des ersten Fluidraums eine dritte Steuerfläche aufweist, die in der Schließstellung des Ventilkolbens an einen Ventilsitz angrenzt, wobei der Fluidkanal in Form mindestens eines aus dem Steuerteil herausführenden Kanalabschnitts hinter diesem Ventilsitz in den zweiten Fluidraum ausmündet. Weitere Ventilvorrichtungen gehen aus der US 3 840 049 und der US 4 603 710 hervor.

Ausgehend von diesem Stand der Technik ist es die Aufgabe der Erfindung, eine Ventilvorrichtung und ein Verfahren zum Betrieb einer solchen Ventilvorrichtung aufzuzeigen, die sich demgegenüber durch einen geringeren Differenzdruck und einen größeren Strömungsquerschnitt in den Öffnungsstellungen des Ventils auszeichnen.

Diese Aufgabe wird durch eine Ventilvorrichtung mit den Merkmalen von Patentanspruch 1 gelöst. Vorteilhafte Ausführungsformen der Ventilvorrichtung gehen aus den Unteransprüchen 2 bis 16 hervor. Die Aufgabe wird ferner durch ein Verfahren zum Betrieb einer solchen Ventilvorrichtung mit den Merkmalen von Patentanspruch 17 gelöst.

Gemäß dem kennzeichnenden Teil des Patentanspruches 1 ist vorgesehen, dass der jeweilige Kanalabschnitt des Fluidkanales in der Schließstellung in einen trichterförmig gestalteten, einen Teil des zweiten Fluidraumes bildenden Erweiterungsraum innerhalb des Ventilgehäuses oder eines Ventilblocks ausmündet.

Es ist ferner vorgesehen, dass neben den bereits genannten beiden Fluidräumen ein dritter Fluidraum vorhanden ist, der teilweise von einer ersten Steuerfläche des Ventilkolbens begrenzt ist und der über einen Fluidkanal permanent fluidführend mit dem zweiten Fluidraum verbunden und in der Schließstellung des Ventilkolbens von dem ersten Fluidraum getrennt ist, und dass an einer zweiten, der ersten Steuerfläche bei Druckbeaufschlagung entgegengesetzt wirkenden Steuerfläche des Ventilkolbens der Fluiddruck im zweiten Fluidraum ansteht.

Bei der erfindungsgemäßen Lösung wirken nun nicht mehr, wie im Stand der Technik aufgezeigt, die Strömungskräfte in schließender Richtung auf den Ventilkörper ein, sondern vielmehr in öffnender Richtung, was zu einer Erhöhung des wirksamen Strömungsquerschnitts führt und somit den in einen Verbraucher, der an die Ventilvorrichtung angeschlossen ist, einzuspeisenden Volumenstrom entsprechend erhöht. Neben einer vollumfänglichen Versorgung des hydraulischen Verbrauchers durch Vergrößerung des durch die Ventilvorrichtung hindurchzuführenden Volumenstroms ist insoweit auch das Druckgefälle reduziert, so dass Kavitation an den hierfür kritischen Stellen und Bauteilen der Ventilvorrichtung weitestgehend vermieden ist.

Somit ist unmittelbar der angesprochene große Öffnungsquerschnitt für den Fluiddurchstrom durch das Ventil erreicht, und zwar bereits in sehr frühen Öffnungsstadien des Ventilkolbens, so dass jedenfalls der an die Ventilvorrichtung angeschlossene hydraulische Verbraucher keinen hohen Druckstößen (Schocksituation) ausgesetzt ist, sondern kontinuierlich im Rahmen einer sanft ansteigenden Druckübergangsfunktion mit dem Fluid versorgt wird. Ferner erfolgt eine sinnfällige Manipulation der stationären Druckkräfte an den stirnseitigen Steuerflächen des Ventilkolbens durch den permanent vorgesehenen Druckabgriff im Bereich hoher Geschwindigkeiten der Fluidströmung bei zumindest teilgeöffneter Ventilkolbenposition, so dass, bedingt durch Strömungseffekte (Venturi-Effekt), der Öffnungsvorgang für den Ventilkolben in "aufziehender Weise" unterstützt ist. Dies hat so keine Entsprechung im Stand der Technik.

Der Ventilkolben ist in ein Betätigungsteil und in ein die Fluidführung zwischen dem ersten Fluidraum und dem zweiten Fluidraum ansteuerndes Steuerteil unterteilt und die erste Steuerfläche und die zweite Steuerfläche können Bestandteile desselben Betätigungsteils sein. Auf diese Weise ist die Betätigung des Ventilkolbens von der Steuerung des Fluidstroms zwischen den Fluidräumen funktional und räumlich getrennt. Auf diese Weise ist es möglich, den Ventilkolben strömungsoptimiert auszubilden.

Das Steuerteil des Ventilkolbens weist auf seiner geschlossen ausgebildeten freien Stirnseite in Richtung des ersten Fluidraums eine dritte Steuerfläche auf, die in der Schließstellung des Ventilkolbens an einen Ventilsitz angrenzt, und der Fluidkanal in Form mindestens eines, insbesondere quer zur Verfahrachse des Ventilkolbens, aus dem Steuerteil herausführenden Kanalabschnitts mündet hinter diesem Ventilsitz in den zweiten Fluidraum aus. Unmittelbar hinter dem Ventilsitz hat bei geöffneter Ventilstellung die Fluidströmung in der Ventilvorrichtung die höchste Geschwindigkeit. Aufgrund der Strömungsgleichungen von Bernoulli und/oder Venturi steigt die Strömungsgeschwindigkeit an dieser Engstelle an und der Druck des Fluids nimmt entsprechend bei steigender Geschwindigkeit ab. Mithin kann auf diese Weise ein im Vergleich zum übrigen zweiten Fluidraum verringerter Fluiddruck des Fluidstroms abgegriffen und über den Fluidkanal in den dritten Fluidraum weitergemeldet werden, so dass mit nur geringen Betätigungskräften bei klein aufbauender Ventilvorrichtung große Fluidströme ohne Weiteres beherrschbar sind. Der verringerte Fluiddruck im dritten Fluidraum sorgt dann auch für eine verringerte Druckkraft auf die erste Steuerfläche des Ventilkolbens, wodurch der Öffnungshub des Ventilkolbens vergrößert wird.

Weiterhin ist es strömungstechnisch vorteilhaft, dass der jeweilige, insbesondere quer verlaufende, Kanalabschnitt des Fluidkanales in einen trichterförmig gestalteten, einen Teil des zweiten Fluidraumes bildenden Erweiterungsraum innerhalb des Ventilgehäuses oder des Ventilblocks ausmündet.

Das Betätigungsteil des Ventilkolbens ist vorzugsweise entlang einer Führung im Ventilgehäuse geführt, die seine druckwirksame erste Steuerfläche von seiner zweiten Steuerfläche hydraulisch trennt. Das Betätigungsteil und das Steuerteil sind weiter bevorzugt von einem Stangenteil auf Abstand gehalten, der den zweiten Fluidraum durch- oder übergreift. Auf diese Weise ist der Ventilkolben verkantungs- und insoweit hemmnisfrei im Ventilgehäuse geführt. Durch die angesprochene räumliche Trennung von Betätigungsteil und Steuerteil ist weiter sichergestellt, dass bei Strömungskrafteinleitung in das Ventilgehäuse dennoch ein funktionssicherer Ansteuerbetrieb für das Steuerteil über das räumlich getrennte Betätigungsteil möglich ist. Hierzu trägt auch mit bei, dass die Bauhöhe des Steuerteils, in Verfahrrichtung des Ventilkolbens gesehen, vorteilhaft kleiner ausgeführt ist als die Bauhöhe des Betätigungsteils, und diese ist wiederum kleiner als die Bauhöhe des Stangenteils ausgeführt.

Der Fluidkanal durchgreift besonders vorteilhaft das Betätigungsteil und das Stangenteil und mündet endseitig im Steuerteil in Richtung des zweiten Fluidraums an einer Ausmündung aus. Auf diese Weise kann der Fluiddruck im zweiten Fluidraum an einer vom Betätigungsteil entfernten Stelle störungsfrei abgegriffen werden.

Der jeweilige, insbesondere quer verlaufende, Kanalabschnitt des Fluidkanals kann etwa auf der Hälfte der Bauhöhe des Steuerteils ausmünden.

Besonders bevorzugt weisen in zumindest einer der geöffneten Stellungen, insbesondere in der maximal geöffneten Stellung des Ventilkolbens, die Isobaren der Fluidströmung im Bereich der Ausmündung des Fluidkanals einen überwiegend gleichförmigen Verlauf auf. Weiter bevorzugt liegen zwecks Druckabgriffs die Isotachen der Fluidströmung in zumindest einer der geöffneten Stellungen, insbesondere in der maximal geöffneten Stellung, des Ventilkolbens im Bereich der Ausmündung am dichtesten aneinander. Als "Isotachen" gelten bei dem hier vorliegenden Schutzrecht die Isolinien der gleichen Fließgeschwindigkeit des Fluids. Die gewählte Form der Strömungsoptimierung des Fluidstroms durch die Ventilvorrichtung bringt es mit sich, dass die Fluidströmung im Bereich der Ausmündung die höchste Geschwindigkeit erreicht. Entsprechend ist dort der Fluiddruck am geringsten und dieser reduzierte Fluiddruck ist dann auch über den Fluidkanal im dritten Fluidraum vorherrschend. Die erste Steuerfläche des Ventilkolbens wird somit mit einem geringeren Fluiddruck beaufschlagt. Damit wird der Hub des Ventilkolbens automatisch umso größer, je höher die Geschwindigkeit des Fluidstroms zwischen erstem Fluidraum und zweitem Fluidraum ist.

Das Steuerteil des Ventilkolbens ist in dessen Schließstellung zur dichtenden Anlage an einem Ventilsitz außenumfangsseitig zumindest teilweise mit einer sich in Richtung auf den dritten Fluidraum aufweitenden Form ausgebildet. Das kann beispielweise eine Kalottenform, eine Kuppelform, aber auch eine Kegel- oder eine Kegelstumpfform sein. Insbesondere bei der Kalotten- und der Kuppelform weist der Ventilkolben somit vorteilhaft eine linienförmige Anlagefläche am Ventilsitz auf, über die der Ventilkolben mit einer entsprechend hohen Flächenpressung am Ventilsitz in der dichtenden Schließstellung anliegt. Ein weiterer Vorteil dieser Ausbildung ist der reduzierte Strömungswiderstand des Ventilkolbens in diesem Bereich. Der Ventilsitz ist dabei vorteilhaft aus einer abgeschrägten und/oder mit einem konvexen Flächenverlauf versehenen Sitzfläche im Ventilblock oder im Ventilgehäuse gebildet.

Bevorzugt ist im dritten Ventilraum ein Energiespeicher, insbesondere in Form einer Druckfeder, angeordnet, der den Ventilkolben in seiner Schließstellung zu halten sucht. Auf diese Weise muss der Fluiddruck im ersten Fluidraum zunächst eine hinreichende Ansteuerhöhe aufweisen, bevor sich die Ventilvorrichtung öffnet und den ersten Fluidraum mit dem zweiten Fluidraum verbindet. Auf diese Weise ist sichergestellt, dass Fluid aus dem ersten Fluidraum nicht unkontrolliert in den zweiten Fluidraum überströmen kann.

Das Ventilgehäuse ist bevorzugt in der Art einer Einschraubpatrone (Cartridge-Ventil) ausgebildet, die in einen Ventilblock einschraubbar ist und die beiden Fluidräume zumindest teilweise aufweist. Eine derartige Patronenbauweise hat sich besonders in der Praxis bewährt, weil sie in genormten Größen kostengünstig hergestellt und verbaut werden kann. Weiterhin ist es auf diese Weise leichter möglich, die Ventilvorrichtung bei Bedarf auszutauschen.

Ein Druckbegrenzungsventil kann zusätzlich zu der Ventilvorrichtung in den Ventilblock eingesetzt sein. Ein solches Ventil trägt dazu bei, den Druck im zweiten Fluidraum der Ventilvorrichtung vorteilhaft auf ein zulässiges Maß zu begrenzen.

Der erste Fluidraum kann auf ein vorgebbares Druckniveau vorgespannt werden und vorzugsweise aus einem Fluid vorratstank bestehen. Der zweite Fluidraum ist regelmäßig an einen hydraulischen Verbraucher angeschlossen, der insbesondere einer ziehenden Last ausgesetzt sein kann, was zumindest in der Schließstellung des Ventilkolbens zum Absinken des Druckes im zweiten Ventilraum führt. Auf diese Weise kann vorteilhaft die Kavitation im zweiten Fluidraum vermieden werden, da die Ventilvorrichtung öffnet, sobald sich eine entsprechende Druckdifferenz zwischen dem ersten und dem zweiten Fluidraum eingestellt hat.

Die Aufgabe der Erfindung wird ferner durch ein Verfahren zum Betrieb einer Ventilvorrichtung gelöst. Dieses zeichnet sich dadurch aus,
- dass der Ventilkolben bei Druckabfall im zweiten Fluidraum und bei einem demgegenüber im ersten Fluidraum höheren Vorspanndruck in eine seiner Öffnungsstellungen selbständig verfährt;
- dass zur Strömungskraftkompensation des in der jeweiligen Öffnungsstellung zwischen dem ersten und dem zweiten Fluidraum mit hoher Geschwindigkeit strömenden Fluids, das den Ventilkolben aufgrund des Bernoulli/Venturi-Effektes mit einem verringerten Druck beaufschlagt, ein gegenüber dem im zweiten Fluidraum herrschenden statischen Druck verminderter Druck über den Fluidkanal im dritten Fluidraum herrscht und an der ersten Steuerfläche des Betätigungsteils ansteht; und
- dass die hierbei entstehende Druckdifferenz zwischen erster Steuerfläche und zweiter, dem statischen Druck im zweiten Fluidraum ausgesetzter, Steuerfläche des Betätigungsteils im Sinne einer öffnenden Kraft der bedingt durch den Bernoulli/Venturi-Effekt reduzierten Druckkraft der Strömung des Fluids auf die dritte Steuerfläche des Steuerteils entgegenwirkt.

Auf diese Weise ist vorteilhaft sichergestellt, dass der Ventilkolben bei einer hohen Strömungsgeschwindigkeit des Fluids durch die Ventilvorrichtung entsprechend weit vom Ventilsitz abgehoben wird, so dass dem Fluidstrom ein geringer Widerstand entgegengesetzt wird.

Die Erfindung wird nachfolgend anhand der Zeichnung näher erläutert. Dabei zeigen in prinzipieller und nicht maßstäblicher Darstellung die
- Fig. 1: ausschnittsweise eine Längsschnittdarstellung durch die erfindungsgemäße Ventilvorrichtung;
- Fig. 2: einen rechten Bildausschnitt der Darstellung nach der Fig. 1;
- Fig. 3: das Detail X der Fig. 2 in einer vergrößerten Darstellung;
- Fig. 4: die Isobaren der Fluidströmung, insbesondere im ersten und zweiten Fluidraum;
- Fig. 5: die Isotachen der Fluidströmung, insbesondere im ersten und zweiten Fluidraum; und
- Fig. 6: die auftretenden Strömungsgeschwindigkeiten durch den ersten und zweiten Fluidraum veranschaulicht durch Strömungsvektoren.

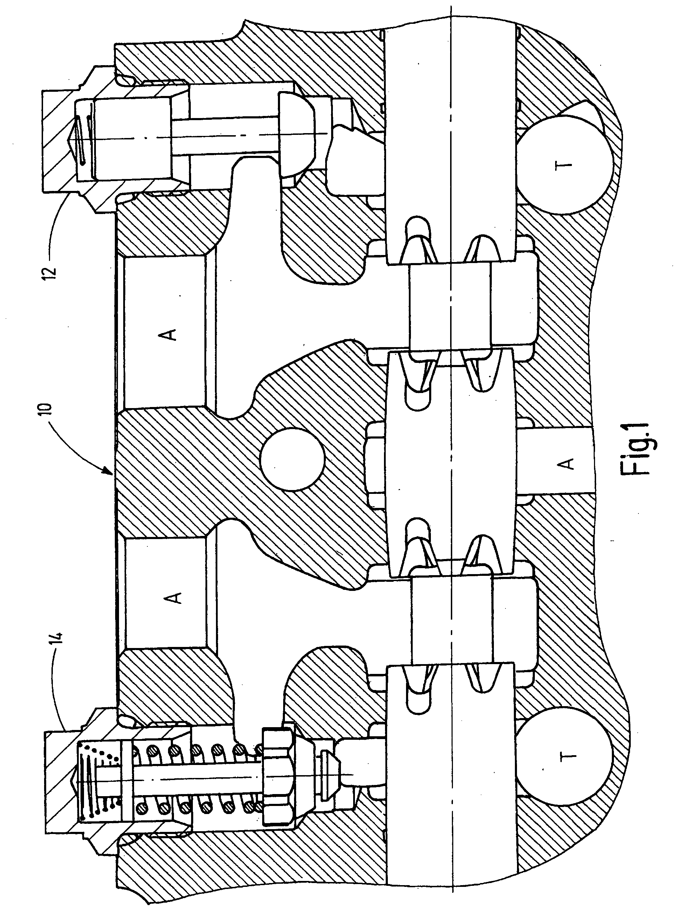

In der Fig. 1 ist der obere Teil eines Ventilblocks 10 dargestellt, der zumindest teilweise auch Ventilgehäuseteile der beiden in ihm aufgenommenen Ventilvorrichtungen 12, 14 mit ausbildet. Die eine Ventilvorrichtung 12 ist als Rückschlagventil und die andere Ventilvorrichtung 14 ist als Druckbegrenzungsventil konzipiert. Durch beide Ventilvorrichtungen 12, 14 wird jeweils eine Fluidverbindung zwischen einem hydraulischen Vorratstank T und einem Arbeitsanschluss A angesteuert. Der Tank T ist mit einem Druck von beispielsweise ca. 10 bar vorgespannt. Sinkt der Druck am Arbeitsanschluss A beispielsweise aufgrund einer ziehenden Last am angeschlossenen hydraulischen Verbraucher hinreichend weit ab, so öffnet sich das Rückschlagventil 12 automatisch und ermöglicht einen verstärkten Fluidstrom vom Tank T zum Arbeitsanschluss A, wobei eine mögliche Kavitation im Bereich des Arbeitsanschlusses A verhindert wird. Steigt der Druck am Arbeitsanschluss A hingegen über ein zulässiges Maß an, so öffnet das Druckbegrenzungsventil 14 und erlaubt ein Ablassen des Fluids in Richtung des Tanks T. Ein in der Fig. 1 ebenfalls dargestelltes Schieberventil, mit welchem ein von einem Versorgungsanschluss P kommendes Fluid auf den einen oder den anderen der beiden Arbeitsanschlüsse A geführt werden kann, wird hier außer Betracht gelassen.

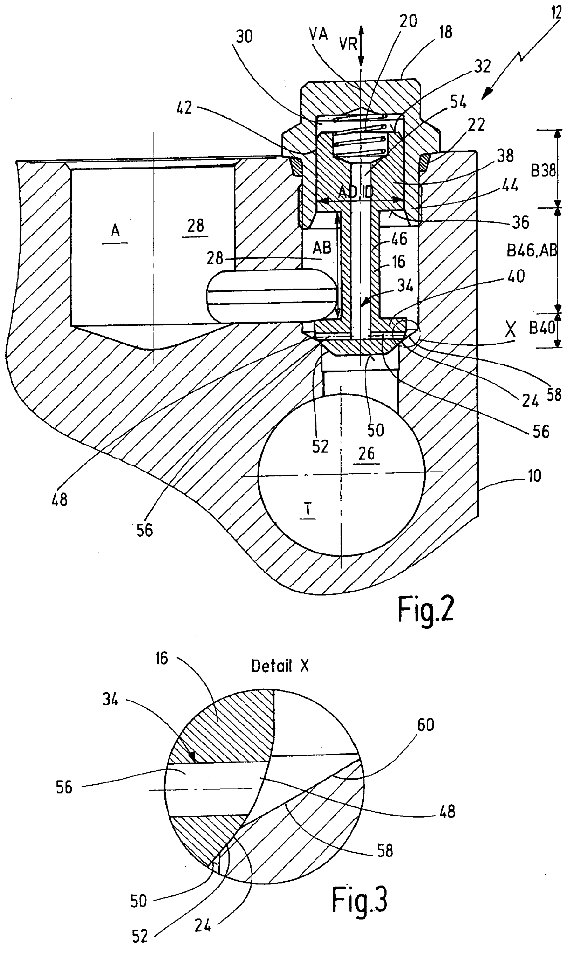

In der Fig. 2 ist die erfindungsgemäße Ventilvorrichtung 12, wie in Fig. 1 rechts dargestellt, als Rückschlagventil konzipiert. Die Ventilvorrichtung 12 als Teil des Ventilblocks 10 weist einen Ventilkolben 16 auf, der gegenüber einem Ventilgehäuse 18 durch einen Energiespeicher 20 in Form einer Druckfeder beaufschlagt ist. Die Druckfeder 20 sucht insoweit den Ventilkolben 16 in seiner in der Fig. 2 gezeigten Schließstellung zu halten. Das Ventilgehäuse 18 ist in Patronenbauweise in den Ventilblock 10 eingeschraubt und gegenüber dem Ventilblock 10 durch einen Dichtring 22 abgedichtet. Der Ventilkolben 16 ist in der Schließstellung an einem Ventilsitz 24 im Ventilblock 10 in Anlage, vgl. auch die vergrößerte Detaildarstellung in der Fig. 3, gehalten. Der Ventilkolben 16 ist des Weiteren in dem Ventilgehäuse 18 längsverfahrbar geführt und verbindet ausgehend von einer Schließstellung in mindestens einer seiner Öffnungsstellungen einen ersten Fluidraum 26 mit einem zweiten Fluidraum 28 des Ventilblocks 10 fluidführend miteinander. Ferner ist ein dritter Fluidraum 30 vorhanden, der teilweise von einer ersten Steuerfläche 32 des Ventilkolbens 16 begrenzt ist und der über einen Fluidkanal 34 permanent fluidführend mit dem zweiten Fluidraum 28 verbunden und in der Schließstellung des Ventilkolbens 16 vom ersten Fluidraum 26 getrennt ist. An einer zweiten Steuerfläche 36 des Ventilkolbens 16, die der ersten Steuerfläche 32 bei Druckbeaufschlagung entgegengesetzt wirkt, steht der Fluiddruck im zweiten Fluidraum 28 an.

Der Ventilkolben 16 ist in ein Betätigungsteil 38 und in ein die Fluidführung zwischen dem ersten Fluidraum 26 und dem zweiten Fluidraum 28 ansteuerndes Steuerteil 40 unterteilt. Die erste Steuerfläche 32 und die zweite Steuerfläche 36 sind Bestandteile des Betätigungsteils 38. Das Betätigungsteil 38 des Ventilkolbens 16 ist entlang einer Führung 42 im Ventilgehäuse 18 geführt, die seine druckwirksame erste Steuerfläche 32 von einer zweiten Steuerfläche 36 hydraulisch trennt. Das Ventilgehäuse 18 ist im Wesentlichen topfförmig ausgebildet, so dass der dritte Fluidraum 30 zwischen dem Betätigungsteil 38 und der Führung 42 in der Art einer Druckkammer ausgebildet ist. Die Führung 42 ist durch ein Wandteil 44 des Ventilgehäuses 18 gebildet. Der Innendurchmesser ID des Wandteils 44 weist nur ein geringes Übermaß gegenüber dem Außendurchmesser AD des Betätigungsteils 38 auf, so dass der Ventilkolben 16 verkantungsfrei im Ventilgehäuse 18 geführt und der dritte Fluidraum 30 fluiddicht vom zweiten Fluidraum 28 getrennt ist.

Das Betätigungsteil 38 und das Steuerteil 40 sind von einem Stangenteil 46 auf einen Abstand AB voneinander gehalten, das den zweiten Fluidraum 28 durchgreift. Die Bauhöhe B40 des Steuerteils 40 in Verfahrrichtung VR des Ventilkolbens 16 gesehen ist kleiner als die Bauhöhe B38 des Betätigungsteils 38 und diese ist wiederum kleiner als die Bauhöhe B46 des Stangenteils 46.

Der Fluidkanal 34 durchgreift das Betätigungsteil 38 und das Stangenteil 46 und mündet endseitig im Steuerteil 40 in Richtung des zweiten Fluidraums 28 an einer Mündung 48 aus. Das Steuerteil 40 des Ventilkolbens 16 weist dazu auf seiner geschlossen ausgebildeten freien Stirnseite 50 in Richtung des ersten Fluidraums 50 eine dritte Steuerfläche 52 auf, die in der Schließstellung des Ventilkolbens 16 an den Ventilsitz 24 angrenzt. Der Fluidkanal 34 erstreckt sich in Form einer Axialbohrung 54 vom Betätigungsteil 38 durch den Stangenteil 46 bis in das Steuerteil 40. Von dort aus mündet der Fluidkanal 34 in Form mindestens eines, insbesondere quer zur Verfahrachse VA des Ventilkolbens 16, aus dem Steuerteil 40 herausführenden Kanalabschnitts 56 hinter dem Ventilsitz 24 in den zweiten Fluidraum 28 aus. Die quer zur Verfahrachse VA des Ventilkolbens 16 verlaufenden Kanalabschnitte 56 können diametral gegenüberliegend zueinander ausgebildet sein. In diesem Ausführungsbeispiel sind sie durch eine Durchgangsbohrung 56 durch das Steuerteil 40 gebildet. Der jeweilige Kanalabschnitt 56 des Fluidkanals 34 mündet etwa auf der Hälfte der Bauhöhe B40 des Steuerteils 40 in einen trichterförmig gestalteten, einen Teil des zweiten Fluidraumes 28 bildenden Erweiterungsraum 58 innerhalb des Ventilblocks 10 aus.

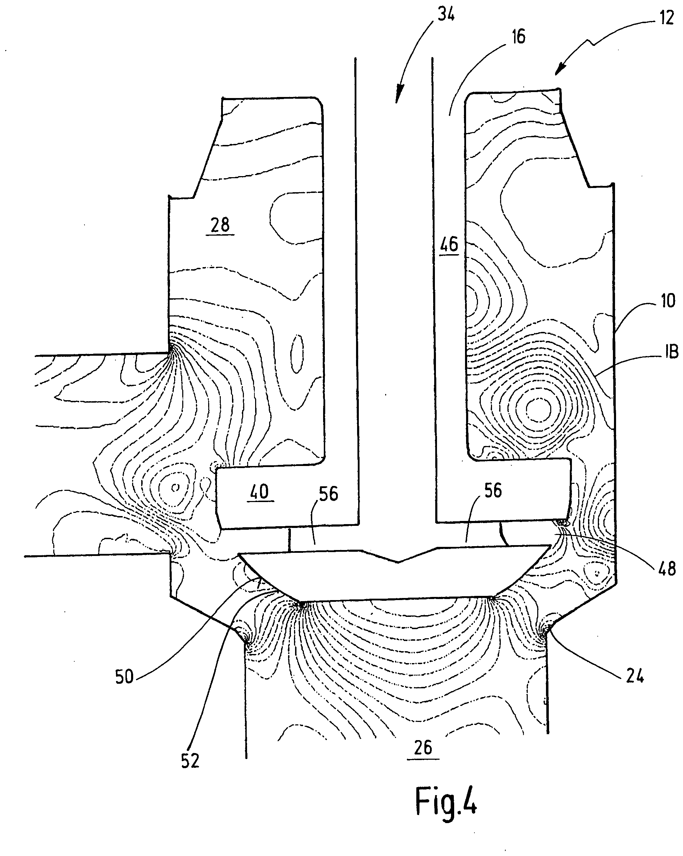

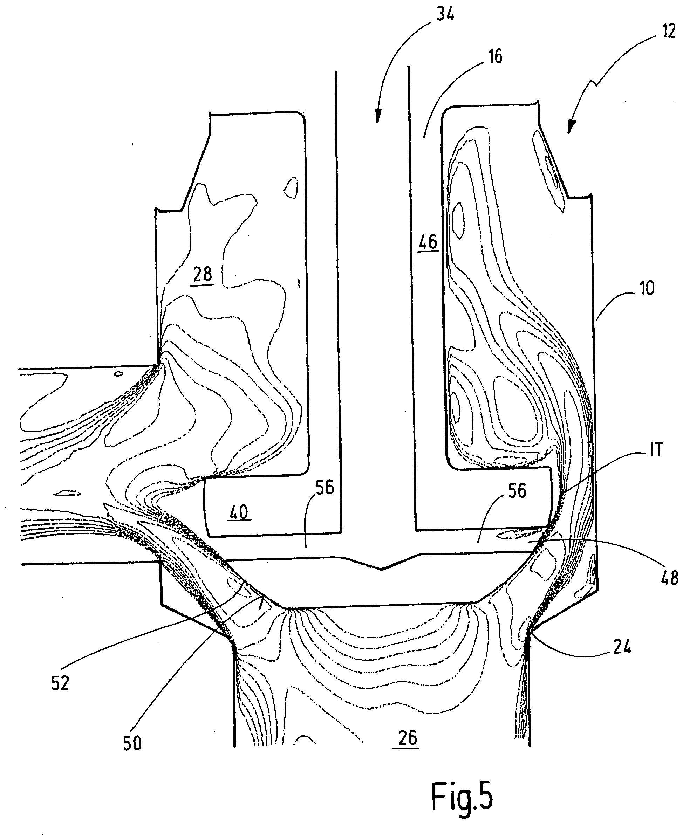

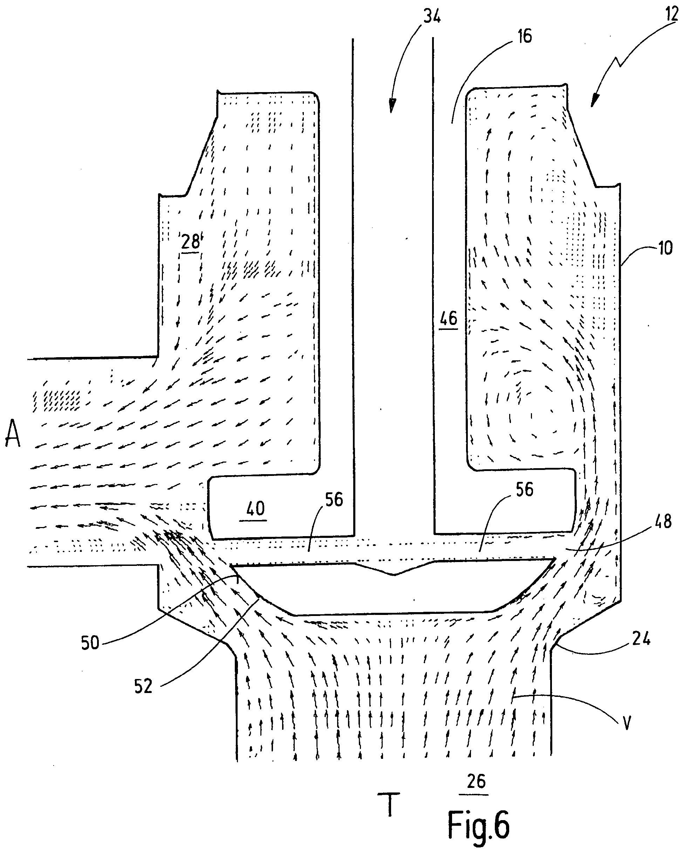

Die Ventilvorrichtung 12 ist so gestaltet, dass zumindest in einer der geöffneten Stellungen, insbesondere in der maximal geöffneten Stellung, des Ventilkolbens 16 die Isobaren IB (Isolinien des gleichen Drucks des Fluides) der Fluidströmung im Bereich der Ausmündung 48 des Fluidkanals 34 einen überwiegend gleichförmigen Verlauf aufweisen. Dies ist insbesondere in Fig. 4 dargestellt. Die Isotachen IT (Isolinien der gleichen Fließgeschwindigkeit des Fluids) der Fluidströmung liegen in der maximal geöffneten Stellung des Ventilkolbens 16 im Bereich der Ausmündung 48 am dichtesten aneinander (vgl. Fig. 5). Aufgrund der Strömungsgleichungen von Bernoulli und/oder Venturi weist das Fluid an dieser Engstelle der Ventilvorrichtung 12 eine besonders hohe Strömungsgeschwindigkeit und damit relativ gesehen einen besonders geringen Druck auf. In der Fig. 6 sind die auftretenden Strömungsgeschwindigkeiten des Fluids durch die Ventilvorrichtung 12 anhand von Strömungsvektoren V im Einzelnen dargestellt. Der reduzierte Druck wird über den Fluidkanal 34 abgegriffen und in den dritten Fluidraum 30 weitergemeldet. Auf diese Weise steht an der ersten Steuerfläche 32 des Ventilkolbens 16 gegenüber den übrigen Steuerflächen 36 ein geringerer Fluiddruck 50 an. Dieser verringerte Fluiddruck bewirkt einen sich vergrößernden Öffnungshub des Ventilkolbens 16 bei steigender Strömungsgeschwindigkeit des Fluids durch die Ventilvorrichtung 12. Entsprechend vergrößert sich der Fluidstrom, der pro Zeiteinheit durch die Ventilvorrichtung 12 strömen kann, und der Strömungswiderstand wird reduziert.

Das Steuerteil 40 des Ventilkolbens 16 ist in dessen Schließstellung zur dichten Anlage an dem Ventilsitz 24 außenumfangsseitig in einer strömungsoptimierten Form zumindest teilweise kalotten- oder kuppelförmig ausgebildet und in Anlage mit einer abgeschrägten Sitzfläche 60 des Ventilblocks 10.

Nachfolgend wird des besseren Verständnisses wegen die Funktionsweise der erfindungsgemäßen Ventilvorrichtung näher erläutert.

Der Ventilkolben 16 verfährt von selbst bei einem während des Betriebs der Ventilvorrichtung entstehenden Druckabfall im zweiten Fluidraum 28 und bei einem demgegenüber im ersten Fluidraum 26 höheren Vorspanndruck in eine seiner Öffnungsstellungen. Auf diese Weise kommt es zu einem Fluidstrom zwischen dem ersten Fluidraum 26 und dem zweiten Fluidraum 28. Zur Strömungskraftkompensation des in der jeweiligen Öffnungsstellung zwischen dem ersten und dem zweiten Fluidraum 26, 28 mit hoher Geschwindigkeit strömenden Fluids, das den Ventilkolben 16 aufgrund des Bernoulii/Venturi-Strömungseffektes mit einem verringerten Druck beaufschlagt, steht ein gegenüber dem im zweiten Fluidraum 28 herrschenden statischen Druck verminderter Druck über den Fluidkanal 34 im dritten Fluidraum 30 und an dessen erster Steuerfläche 32 des Betätigungsteils 38 trotz der Krafteinwirkung der Druckfeder 20 an. Die hierbei entstehende Druckdifferenz zwischen erster Steuerfläche 32 und zweiter, dem statischen Druck im zweiten Fluidraum ausgesetzter, Steuerfläche 36 des Betätigungsteils 38 im Sinne einer öffnenden Kraft wirkt der bedingt durch den Bernoulli/Venturi-Effekt reduzierten Druckkraft der Strömung des Fluids auf die dritte Steuerfläche 52 des Steuerteils 40 entgegen und führt zu einem automatisch vergrößerten Öffnungshub des Ventilkolbens 16.

In der Fig. 6 ist der Druck- bzw. der Strömungsgeschwindigkeitsverlauf des Fluids durch die Ventilvorrichtung 12 gezeigt. Im ersten Fluidraum 26, der Teil des Fluidvorratstanks T ist, herrscht ein Fluiddruck von beispielsweise ca. 10 bar. Im geöffneten Zustand der Ventilvorrichtung 12 strömt das Fluid vom Tank T kommend am Ventilkolben 16 vorbei in den zweiten Fluidraum 28 ein, der Teil des Arbeitsanschlusses A für den anzuschließenden oder angeschlossenen hydraulischen Verbraucher (nicht dargestellt) ist. Dabei weist das Fluid im Bereich der dritten Steuerfläche 52 des Ventilkolbens 16 eine besonders hohe Strömungsgeschwindigkeit in einem Bereich unmittelbar hinter dem Ventilsitz 24 auf. Dementsprechend ist der Fluiddruck des Fluids dort entsprechend reduziert. Dieser reduzierte Fluiddruck, wird durch den Fluidkanal 34 im Ventilkolben 16 an der Ausmündung 48 abgegriffen und in den dritten Fluidraum 30 weitergemeldet. Entsprechend führt der Druckunterschied zwischen der ersten Steuerfläche 32 und der zweiten Steuerfläche 36 des Betätigungsteils 38 zu einer im Sinne einer in Öffnungsrichtung wirkenden zusätzlichen Kraft, die dem verringerten Fluiddruck im Bereich der dritten Steuerfläche 52 zwar entgegenwirkt, aber dennoch den Ventilkolben 16 weiter vom Ventilsitz 24 abhebt. Auf diese Weise wird der Öffnungsquerschnitt weiter erhöht und der Strömungswiderstand der Ventilvorrichtung 12 entsprechend verringert.

Das erfindungsgemäße Ventil 12 hat den Vorteil, dass ein permanenter Druckausgleich zwischen dem zweiten Fluidraum 28 und dem dritten Fluidraum 30 stattfinden kann. Auf diese Weise kann der Hub oder freie Verfahrweg des Ventilkolbens 16 vorteilhaft durch den Fluiddruck im zweiten Fluidraum 28 mit beeinflusst werden. Weiterhin kann der Öffnungshub vorteilhaft durch die Fluidströmung vergrößert werden. Dies hat zu Folge, dass der Strömungswiderstand verringert und der Volumenstrom des Fluids durch die Ventilvorrichtung 12 vorteilhaft erhöht wird.

## Patentansprüche

1. Ventilvorrichtung, insbesondere in der Art eines Rückschlagventils ausgebildet, mit einem in einem Ventilgehäuse (18) längsverfahrbar geführten Ventilkolben (16), der ausgehend von einer Schließstellung in mindestens einer seiner Öffnungsstellungen einen ersten Fluidraum (26) mit einem zweiten Fluidraum (28) fluidführend verbindet, wobei ein dritter Fluidraum (30) vorhanden ist, der teilweise von einer ersten Steuerfläche (32) des Ventilkolbens (16) begrenzt ist und der über einen Fluidkanal (34) permanent fluidführend mit dem zweiten Fluidraum (28) verbunden und in der Schließstellung des Ventilkolbens (16) von dem ersten Fluidraum (26) getrennt ist, wobei an einer zweiten, der ersten Steuerfläche (32) bei Druckbeaufschlagung entgegengesetzt wirkenden Steuerfläche (36) des Ventilkolbens (16) der Fluiddruck im zweiten Fluidraum (28) ansteht, wobei der Ventilkolben (16) in ein Betätigungsteil (38) und in ein die Fluidführung zwischen dem ersten Fluidraum (26) und dem zweiten Fluidraum (28) ansteuerndes Steuerteil (40) unterteilt ist, und wobei das Steuerteil (40) des Ventilkolbens (16) auf seiner geschlossen ausgebildeten freien Stirnseite (50) in Richtung des ersten Fluidraums (26) eine dritte Steuerfläche (52) aufweist, die in der Schließstellung des Ventilkolbens (16) an einen Ventilsitz (24) angrenzt, wobei der Fluidkanal (34) in Form mindestens eines aus dem Steuerteil (40) herausführenden Kanalabschnitts (56) hinter diesem Ventilsitz (24) in den zweiten Fluidraum (28) ausmündet, dadurch gekenntzeichnet, dass der jeweilige Kanalabschnitt des Fluidkanales (56) in der Schließstellung in einen trichterförmig gestalteten, einen Teil des zweiten Fluidraumes (28) bildenden Erweiterungsraum (58) innerhalb des Ventilgehäuses (18) oder eines Ventilblocks (10) ausmündet.

2. Ventilvorrichtung nach Anspruch 1, **dadurch gekennzeichnet, dass** die erste Steuerfläche (32) und die zweite Steuerfläche (36) Bestandteile des Betätigungsteils (38) sind.

3. Ventilvorrichtung nach Anspruch 2, **dadurch gekennzeichnet, dass** das Betätigungsteil (38) des Ventilkolbens (16) entlang einer Führung (42) im Ventilgehäuse (18) geführt ist, die seine druckwirksame erste Steuerfläche (32) von seiner zweiten Steuerfläche (36) hydraulisch trennt.

4. Ventilvorrichtung nach Anspruch 2 oder 3, **dadurch gekennzeichnet, dass** das Betätigungsteil (38) und das Steuerteil (40) von einem Stangenteil (46) auf Abstand (AB) voneinander gehalten sind, der den zweiten Fluidraum (28) durch- oder übergreift.

5. Ventilvorrichtung nach Anspruch 4, **dadurch gekennzeichnet, dass** die Bauhöhe (B40) des Steuerteils (40) in Verfahrrichtung (VR) des Ventilkolbens (16) gesehen kleiner als die Bauhöhe (B38) des Betätigungsteils (38) ist und diese wiederum kleiner als die Bauhöhe (B46) des Stangenteils (46) ist.

6. Ventilvorrichtung nach Anspruch 4 oder 5, **dadurch gekennzeichnet, dass** der Fluidkanal (34) das Betätigungsteil (38) und das Stangenteil (46) durchgreift und endseitig im Steuerteil (40) in Richtung des zweiten Fluidraums (28) an einer Ausmündung (48) ausmündet.

7. Ventilvorrichtung nach einem der Ansprüche 2 bis 6, **dadurch gekennzeichnet, dass** der Kanalabschnitt (56) zur Verfahrachse (VA) des Ventilkolbens (16) verläuft.

8. Ventilvorrichtung nach Anspruch 6 oder 7, **dadurch gekennzeichnet, dass** der jeweilige, insbesondere quer verlaufende, Kanalabschnitt (56) des Fluidkanales (34) etwa auf der Hälfte der Bauhöhe (B40) des Steuerteils (40) ausmündet.

9. Ventilvorrichtung nach einem der Ansprüche 6 bis 8, **dadurch gekennzeichnet, dass** in zumindest einer der geöffneten Stellungen, insbesondere in der maximal geöffneten Stellung, des Ventilkolbens (16) die Isobaren (IB) der Fluidströmung im Bereich der Ausmündung (48) des Fluidkanals (34) einen überwiegend gleichförmigen Verlauf aufweisen.

10. Ventilvorrichtung nach einem der Ansprüche 6 bis 9, **dadurch gekennzeichnet, dass** zwecks Druckabgriff die Isotachen (IT) der Fluidströmung in zumindest einer der geöffneten Stellungen, insbesondere in der maximal geöffneten Stellung, des Ventilkolbens (16) im Bereich der Ausmündung (48) am dichtesten aneinander gelegen sind.

11. Ventilvorrichtung nach einem der Ansprüche 2 bis 10, **dadurch gekennzeichnet, dass** das Steuerteil (40) des Ventilkolbens in dessen Schließstellung zur dichtenden Anlage an einem Ventilsitz (24) außenumfangsseitig zumindest teilweise mit einer sich in Richtung auf den dritten Fluidraum (30) aufweitenden Form - insbesondere einer Kalotten- oder Kuppelform - ausgebildet ist.

12. Ventilvorrichtung nach einem der vorstehenden Ansprüche, **dadurch gekennzeichnet, dass** der Ventilsitz (24) aus einer abgeschrägten und/ oder mit einem konvexen Flächenverlauf versehenen Sitzfläche (60) im Ventilblock (10) oder im Ventilgehäuse (18) gebildet ist.

13. Ventilvorrichtung nach einem der vorstehenden Ansprüche, **dadurch gekennzeichnet, dass** im dritten Fluidraum (30) ein Energiespeicher (20), insbesondere in Form einer Druckfeder, angeordnet ist, der den Ventilkolben (16) in seiner Schließstellung zu halten sucht.

14. Ventilvorrichtung nach einem der vorstehenden Ansprüche, **dadurch gekennzeichnet, dass** das Ventilgehäuse (18) in der Art einer Einschraubpatrone (Cartridge-Ventil) ausgebildet ist, die in einen Ventilblock (10) einschraubbar ist, der die beiden Fluidräume (26, 28) zumindest teilweise aufweist.

15. Ventilvorrichtung nach einem der vorstehenden Ansprüche, **dadurch gekennzeichnet, dass** ein Druckbegrenzungsventil (14) zusätzlich zu der Ventilvorrichtung (12) in den Ventilblock (10) eingesetzt ist.

16. Ventilvorrichtung nach einem der vorstehenden Ansprüche, **dadurch gekennzeichnet, dass** der erste Fluidraum (26) auf ein vorgebbares Druckniveau vorgespannt ist und vorzugsweise aus einem Fluidvorratstank (T) besteht und dass der zweite Fluidraum (28) an einen hydraulischen Verbraucher (A) angeschlossen ist, der, insbesondere einer ziehenden Last ausgesetzt, zumindest in der Schließstellung des Ventilkolbens (16) zum Absinken des Druckes im zweiten Fluidraum (28) führt.

17. Verfahren zum Betrieb einer Ventilvorrichtung nach einem der vorstehenden Ansprüche, **dadurch gekennzeichnet, dass**
- der Ventilkolben (16) bei Druckabfall im zweiten Fluidraum (28) und bei einem demgegenüber im ersten Fluidraum (26) höheren Vorspanndruck in eine seiner Öffnungsstellungen verfährt;
- zur Strömungskraftkompensation des in der jeweiligen Öffnungsstellung zwischen dem ersten und dem zweiten Fluidraum (26, 28) mit hoher Geschwindigkeit strömenden Fluids, das den Ventilkolben (16) aufgrund des Bernoulli/Venturi-Effektes mit einem verringerten Druck beaufschlagt, ein gegenüber dem im zweiten Fluidraum (28) herrschenden statischen Druck verminderter Druck über den Fluidkanal (34) im dritten Fluidraum (30) herrscht und an der ersten Steuerfläche (32) des Betätigungsteils (38) ansteht; und
- die hierbei entstehende Druckdifferenz zwischen erster Steuerfläche (32) und zweiter, dem statischen Druck im zweiten Fluidraum (28) ausgesetzter, Steuerfläche (36) des Betätigungsteils (38) im Sinne einer öffnenden Kraft der bedingt durch den Bernoulli/ Venturi-Effekt reduzierten Druckkraft der Strömung des Fluids auf die dritte Steuerfläche (52) des Steuerteils (40) entgegenwirkt.

## Claims

1. A valve device, in particular made in the manner of a non-return valve, comprising a valve piston (16) that can be moved longitudinally within a valve housing (18), which valve piston fluidically connects a first fluid chamber (26) to a second fluid chamber (26) starting from a closed position into at least one of its open positions, a third fluid chamber (30) being provided which is partly delimited by a first control surface (32) of the valve piston (16) and which is permanently fluidically connected to the second fluid chamber (28) via a fluid channel (34) and is separated from the first fluid chamber (26) in the closed position of the valve piston (16), the fluid pressure in the second fluid chamber (28) being applied to a second valve piston (16) control surface (36) which acts opposite the first control surface (32) when pressure is applied, the valve piston (16) being subdivided into an actuation part (38) and into a control part (40) controlling the conveyance of fluid between the first fluid chamber (26) and the second fluid chamber (28), and the control part (40) of the valve piston (16) having a third control surface (52) on its closed free front side (50) in the direction of the first fluid chamber (26), which third control surface borders on a valve seat (24) when the valve piston (16) is in the closed position, the fluid channel (34) opening out into the second fluid chamber (28) in the form of at least one channel portion (56) leading out of the control part (40) behind this valve seat (24), **characterised in that**, in the closed position, the respective channel portion of the fluid channel (56) opens out into a funnel-shaped expansion chamber (58) that forms part of the second fluid chamber (28) within the valve housing (18) or a valve block (10).

2. The valve device according to Claim 1, **characterised in that** the first control surface (32) and the second control surface (36) are component parts of the actuation part (38).

3. The valve device according to Claim 2, **characterised in that** the actuation part (38) of the valve piston (16) is guided along a guide (42) in the valve housing (18), which guide hydraulically separates its pressure-effective first control surface (32) from its second control surface (36).

4. The valve device according to Claim 2 or 3, **characterised in that** the actuation part (38) and the control part (40) are kept a distance (AB) apart from one another by a rod part (46) which passes through or over the second fluid chamber (28).

5. The valve device according to Claim 4, **characterised in that** the overall height (B40) of the control part (40) is smaller, as viewed in the direction of travel (VR) of the valve piston (16), than the overall height (B38) of the actuation part (38), and this in turn is smaller than the overall height (B46) of the rod part (46).

6. The valve device according to Claim 4 or 5, **characterised in that** the fluid channel (34) passes through the actuation part (38) and the rod part (46) and opens out at the end in the control part (40) at an outlet (48) in the direction of the second fluid chamber (28).

7. The valve device according to any of Claims 2 to 6, **characterised in that** the channel portion (56) runs transversely to the axis of travel (VA) of the valve piston (16).

8. The valve device according to Claim 6 or 7, **characterised in that** the respective, in particular transversely running, channel portion (56) of the fluid channel opens out approximately half way up the overall height (B40) of the control part (40).

9. The valve device according to any of Claims 6 to 8, **characterised in that** in at least one of the open positions, in particular in the maximally open position, of the valve piston (16), the isobars (IB) of the fluid flow in the region of the outlet (48) of the fluid channel (34) have a predominantly uniform course.

10. The valve device according to any of Claims 6 to 9, **characterised in that** for the purpose of pressure tapping, the isotachs (IT) of the fluid flow are positioned the most densely alongside one another in at least one of the open positions, in particular in the maximally open position, of the valve piston (16) in the region of the outlet (48).

11. The valve device according to any of Claims 2 to 10, **characterised in that** the control part (40) of the valve piston in its closed position, for sealing contact against a valve seat (24), is formed on the outer circumferential side at least partially with a shape that widens towards the third fluid chamber (30) - in particular a cap or dome shape.

12. The valve device according to any of the preceding claims, **characterised in that** the valve seat (24) is formed from a bevelled seat surface (60) and/or a seat surface (60) provided with a convex surface extension within the valve block (10) or within the valve housing (18).

13. The valve device according to any of the preceding claims, **characterised in that** there is disposed in the third fluid chamber (30) an energy accumulator (20), in particular in the form of a compression spring which seeks to hold the valve piston (16) in its closed position.

14. The valve device according to any of the preceding claims, **characterised in that** the valve housing (18) is made in the manner of a screw-in cartridge (cartridge valve) which can be screwed into a valve block (10) which at least partially comprises the two fluid chambers (26, 28).

15. The valve device according to any of the preceding claims, **characterised in that** a pressure control valve (14) is inserted into the valve block (10) in addition to the valve device (12).

16. The valve device according to any of the preceding claims, **characterised in that** the first fluid chamber (26) is pre-loaded to a pre-settable pressure level, and preferably consists of a fluid supply tank (T), and that the second fluid chamber (28) is connected to a hydraulic consumer (A) which, in particular subjected to a pulling load, leads to the dropping of the pressure in the second fluid chamber (28), at least in the closed position of the valve piston (16).

17. A method for operating a valve device according to any of the preceding claims, **characterised in that**
- when the pressure drops in the second fluid chamber (28) and when, in comparison to this, there is a higher pre-loading pressure in the first fluid chamber (26), the valve piston (16) moves into one of its open positions;
- in order to compensate for the flow force of the fluid flowing at high speed between the first and the second fluid chamber (26, 28) in the respective open position, which fluid applies a reduced pressure to the valve piston (16) on the basis of the Bernoulli/Venturi effect, a pressure that is reduced in comparison with the static pressure prevailing in the second fluid chamber (28) prevails via the fluid channel (34) in the second fluid chamber (30) and is applied to the first control surface (32) of the actuation part (38); and
- the pressure difference that results here between the first control surface (32) and the second control surface (36) of the actuation part which is subjected to the static pressure in the second fluid chamber (28) in the sense of an opening force counters the compressive force of the flow of fluid over the third control surface (52) of the control part (40) reduced by the Bernoulli/Venturi effect.

## Revendications

1. Dispositif formant soupape, constitué notamment à la manière d'un clapet anti-retour, comprenant un piston (16), qui est guidé avec possibilité de se déplacer longitudinalement dans un corps (18) de soupape qui, à partir d'une position de fermeture relie fluidiquement, dans au moins l'une de ses positions d'ouverture, un premier espace (26) pour du fluide à un deuxième espace (28) pour du fluide, un troisième espace (30) pour du fluide étant présent, qui est limité en partie par une première surface (32) de commande du piston (16) de soupape, et qui communique par un conduit (34) pour du fluide, fluidiquement de manière permanente, avec le deuxième espace (28) pour du fluide et qui, dans la position de fermeture du piston (16) de soupape, est séparé du premier espace (26) pour du fluide, la pression du fluide dans le deuxième espace (28) pour du fluide s'appliquant sur une deuxième surface (36) de commande, agissant de manière antagoniste à la première surface (32) de commande lors d'une alimentation en pression, du piston (16) de soupape, le piston (16) de soupape étant subdivisé en une partie (38) d'actionnement et en une partie (40) de commande, commandant le passage du fluide entre le premier espace (26) pour du fluide et le deuxième espace (28) pour du fluide, et dans lequel la partie (40) de commande du piston (16) de soupape a, sur son côté (50) frontal libre, constitué de manière fermée, dans la direction du premier espace (26) du fluide, une troisième surface (52) de commande, qui, en la position de fermeture du piston (16) de soupape, est voisine d'un siège (24) de soupape, le conduit (34) pour du fluide débouchant sous la forme d'au moins un tronçon (56) de conduit, sortant de la partie (40) de commande, derrière ce siège (24) de soupape dans le deuxième espace (28) pour du fluide,
**caractérisé en ce que** le tronçon respectif du conduit (56) pour du fluide débouche dans la position de fermeture à l'intérieur du corps (18) de soupape ou d'un bloc (10) de soupape, dans un espace (58) d'élargissement, conformé en entonnoir et formant une partie du deuxième espace (28) pour du fluide.

2. Dispositif formant soupape suivant la revendication 1, **caractérisé**
**en ce que** la première surface (32) de commande et la deuxième surface (36) de commande font partie de la partie (38) d'actionnement.

3. Dispositif formant soupape suivant la revendication 2, **caractérisé**
**en ce que** la partie (38) d'actionnement du piston (16) de soupape est guidée dans le corps (18) de soupape le long d'un guidage (42), qui sépare hydrauliquement sa première surface (32) de commande efficace en pression de sa deuxième surface (36) de commande.

4. Dispositif formant soupape suivant la revendication 2 ou 3, **caractérisé**
**en ce que** la partie (38) d'actionnement et la partie (40) de commande sont maintenues à une distance (AB) l'une de l'autre par une partie (46) de tige, qui traverse ou chevauche le deuxième espace (28) pour du fluide.

5. Dispositif formant soupape suivant la revendication 4, **caractérisé**
**en ce que** la hauteur ((B40) de construction de la partie (40) de commande, considérée dans la direction (VR) de déplacement du piston (16) de soupape, est plus petite que la hauteur (B38) de construction de la partie (38) d'actionnement et celle-ci à son tour est plus petite que la hauteur (B46) de construction de la partie (46) de tige.

6. Dispositif formant soupape suivant la revendication 4 ou 5, **caractérisé**
**en ce que** le conduit (34) pour du fluide traverse la partie (38) d'actionnement et la partie (46) de tige et débouche du côté de l'extrémité dans la partie (40) de commande en direction du deuxième espace (28) pour du fluide sur une embouchure (48).

7. Dispositif formant soupape suivant l'une des revendications 2 à 6, **caractérisé**
**en ce que** le tronçon (56) du conduit s'étend transversalement à l'axe (VA) de déplacement du piston (16) de soupape.

8. Dispositif formant soupape suivant la revendication 6 ou 7, **caractérisé**
**en ce que** le tronçon (56), s'étendant notamment transversalement du conduit (34) pour du fluide, débouche à peu près à la moitié de la hauteur (B40) de construction de la partie (40) de commande.

9. Dispositif formant soupape suivant l'une des revendications 6 à 8, **caractérisé**
**en ce que** dans au moins l'une des positions ouverte, notamment dans la position ouverte au maximum du piston (16) de soupape, les isobares (IB) du courant de fluide, dans la région de l'embouchure (48) du conduit (34) pour du fluide, ont un tracé d'une manière prépondérante uniforme.

10. Dispositif formant soupape suivant l'une des revendications 6 à 9, **caractérisé**
**en ce qu'**en vue d'une prise de pression, les courbes de même vitesse du courant de fluide sont, dans au moins l'une des positions d'ouverture, notamment dans la position ouverte au maximum du piston (16) de soupape, les plus proches l'une de l'autre dans la région de l'embouchure (48).

11. Dispositif formant soupape suivant l'une des revendications 2 à 10, **caractérisé**
**en ce que** la partie (40) de commande du piston de soupape est constituée dans sa position de fermeture pour le contact étanche sur un siège (24) de soupape, du côté périphérique extérieur au moins en partie en ayant une forme s'élargissant en direction du troisième espace (30) pour du fluide - notamment une forme en calotte ou en coupelle.

12. Dispositif formant soupape suivant l'une des revendications précédentes, **caractérisé en ce que** le siège (24) de soupape est formé, dans le bloc (10) de soupape ou dans le corps (18) de soupape, d'une surface (60) de siège pourvue d'un tracé de surface biseautée/ou convexe.

13. Dispositif formant soupape suivant l'une des revendications précédentes, **caractérisé en ce que** dans le troisième espace (30) pour du fluide est logé un accumulateur (20) d'énergie, notamment sous la forme d'un ressort de compression, qui tend à maintenir le piston (16) de soupape dans sa position de fermeture.

14. Dispositif formant soupape suivant l'une des revendications précédentes, **caractérisé en ce que** le corps (18) de soupape est constitué à la manière d'une cartouche à visser (soupape à cartouche), qui peut se visser dans un bloc (10) de soupape, qui a au moins en partie les deux espaces (26, 28) pour du fluide.

15. Dispositif formant soupape suivant l'une des revendications précédentes, **caractérisé en ce qu'**une vanne (14) de limitation de la pression est insérée suplémentairement au dispositif (12) formant soupape dans le bloc (10) de soupape.

16. Dispositif formant soupape suivant l'une des revendications précédentes, **caractérisé en ce que** le premier espace (26) pour du fluide est mis au préalable à un premier niveau de pression pouvant être donné à l'avance et est constitué de préférence d'un réservoir (T) de fluide et **en ce que** le deuxième espace (28) pour du fluide est raccordé à un consommateur (A) hydraulique, soumis notamment à une charge de traction, au moins dans la position de fermeture du piston (16) de soupape, pour abaisser la pression dans le deuxième espace (28) pour du fluide.

17. Procédé pour faire fonctionner un dispositif formant soupape suivant l'une des revendications précédentes, **caractérisé en ce que**
le piston (16) de soupape vient, s'il se produit une chute de pression dans le deuxième espace (28) pour du fluide et s'il y a une pression préalable plus haute par rapport à cela dans le premier espace (26) pour du fluide, dans l'une de ses positions d'ouverture;
pour compenser la force du courant du fluide, s'écoulant à grande vitesse, dans la position d'ouverture respective, entre le premier et le deuxième espace (26, 28) pour du fluide, lequel alimente le piston (16) de soupape en raison de l'effet Bernoulli/venturi sous une pression diminuée, une pression diminuée par rapport à la pression statique régnant dans le deuxième espace (28) pour du fluide, règne dans le troisième espace (30) pour du fluide, par l'intermédiaire du conduit (34) pour du fluide et elle s'applique à la première surface (32) de commande de la partie (38) d'actionnement; et
la différence de pression, ainsi créée entre la première surface (32) de commande et la deuxième surface (36) de commande, soumise à la pression statique dans le deuxième espace (28) pour du fluide, de la partie (38) d'actionnement s'oppose au sens d'une force d'ouverture à la force de pression réduite due à l'effet de Bernoulli/venturi du courant de fluide sur la troisième surface (52) de commande de la partie (40) de commande.
